(19) Europäisches Patentamt
European Patent Office
Office européen des brevets

(11) Veröffentlichungsnummer: **0 237 890**
**A2**

(12) **EUROPÄISCHE PATENTANMELDUNG**

(21) Anmeldenummer: **87103240.5**

(51) Int. Cl.4: **C08G 18/10** , C08G 18/79

(22) Anmeldetag: **06.03.87**

(30) Priorität: **19.03.86 DE 3609696**

(43) Veröffentlichungstag der Anmeldung: **23.09.87 Patentblatt 87/39**

(84) Benannte Vertragsstaaten: **CH DE ES FR GB IT LI LU NL SE**

(71) Anmelder: **Mankiewicz Gebr. & Co. (GmbH & Co. KG)**
**Georg-Wilhelm-Strasse 189**
**D-2102 Hamburg 93(DE)**

(72) Erfinder: **Schubert, Bernd, Dr.**
**Gerlachstrasse 2**
**D-2100 Hamburg 90(DE)**
Erfinder: **Rohardt, Klaus D.**
**Eichendorffstrasse 18**
**D-2085 Quickborn(DE)**

(74) Vertreter: **UEXKÜLL & STOLBERG**
**Patentanwälte**
**Beselerstrasse 4**
**D-2000 Hamburg 52(DE)**

(54) **Formmasse.**

(57) Beschrieben wird eine Einkomponenten-Formmasse auf Basis von Polyisocyanato-Isocyanuraten und Flamm-und Brandschutzmitteln sowie gegebenenfalls Polyisocyanaten, Füllstoffen und Beschleunigern, die gekennzeichnet ist durch:

A) 40 bis 80 Gew.% des Isocyanurats des 1,6-Hexamethylendiisocyanats mit einem NCO-Gehalt von 18 bis 24 Gew.%,

B) 0 bis 20 Gew.% Roh-MDI und/oder Präpolymer aus Polyol und Roh-MDI und/oder Isophorondiisocyanat gegebenenfalls in Kombination mit dimerisiertem Triazin des TDI, mischpolymerisiertem Triazin von TDI und HDI und/oder Naphthalindiisocyanat,

C) 5 bis 20 Gew.% einer Mischung aus:

a) 50 bis 100 Gew.% sekundärem Ammoniumphosphat,
b) 0 bis 20 Gew.% primärem Ammoniumphosphat,
c) 0 bis 20 Gew.% Zeolith und/oder kristallinem Alkalisilikat,
d) 0 bis 20 Gew.% feinteiliger Kieselsäure,
e) 0 bis 20 Gew.% $Ca_3(PO_4)_2$,
f) 0 bis 20 Gew.% Azodhicarbonamid
g) 0 bis 20 Gew.% calciniertem Calciumoxid

D) 0 bis 50 Gew.% Füllstoff und

E) 0 bis 5 Gew.% Beschleuniger.

Diese niedrig-viskose spachtelförmige Masse, die kaltverformbar ist und unter Einfluß von Feuchtigkeit, insbesondere bei erhöhten Temperaturen, ausgehärtet wird, eignet sich als Konstruktionswerkstoff für die verschiedensten Anwendungen, insbesondere zur Herstellung von Formteilen und Plattenelementen für den Bau von Land-, Luft-und Wasserfahrzeugen, wobei die nach Aushärtung erhaltenen Produkte höchsten Anforderungen hinsichtlich Brandschutz genügen und ausgezeichnete mechanische Eigenschaften aufweisen.

EP 0 237 890 A2

## FORMMASSE

Die Erfindung betrifft eine neue Formmasse auf Basis von Polyisocyanato-Isocyanuraten und Flamm- und Brandschutzmitteln sowie gegebenenfalls Polyisocyanaten, Füllstoffen und Beschleunigern, welche sich besonders gut zur Verwendung als Konstruktionswerkstoff eignet und insbesondere unter dem Gesichtspunkt des Brandschutzes zu hervorragenden Produkten führt.

Bekannt sind duroplastische Formassen und Schäume aus Polyurethan mit Isocyanat-und Isocyanurat-Komponenten, Epoxidharzen (EPO-Harzen), Phenolharzen und Novolaken, die flammhemmende Zusätze enthalten und als schwer-oder nichtentflammbare Stoffe gelten. Um die Feuerbeständigkeit zu verbessern und eine niedrige Rauchgasdichte und -toxizität zu erreichen, sind eine große Zahl von Formulierungen vorgeschlagen worden. Als flammhemmende Zusätze werden u.a. $Al_2O_3 \times H_2O$, anorganische und organische Phosphate bzw. Phosphonate, Borate, Silikate, Chlorparaffine, Halogenverbindungen, Schwermetallsalze, elementarer Phosphor, Polyphosphate und Antimontrioxid empfohlen. Es sei in diesem Zusammenhang beispielhaft auf die US-PS 4 126 473, EP-PS 69 975, US-PS 4 147 690 und DE-OS 31 05 947 verwiesen. Eine Übersicht über den Stand der Technik findet sich in Becker-Braun, Kunststoffhandbuch, Band 7, Polyurethane, 2. Auflage, 1983, Hanser-Verlag, J. Troitzsch, Brandverhalten von Kunststoffen, Grundlagen etc., Carl Hanser-Verlag, 1982 und Polymerwerkstoffe, Band 2, Technologie 1, H. Batzer et al., Georg Thieme Verlag, Stuttgart, 1984.

Mit Einzelzugaben oder Kombinationen derartiger flammhemmender Zusätze wurden zum Teil recht befriedigende Ergebnisse erzielt. Angesichts der stark zunehmenden Anwendung von Kunststoffen werden heutzutage jedoch insbesondere im Bereich der Personenbeförderung durch eine Reihe von Vorschriften, speziell für die Flugzeug-und PKW-Industrie sowie bei Schiffen, Bahnen und im Bauwesen extreme Anforderungen an den Brandschutz gestellt. Dies dokumentiert sich in verschiedenen nationalen und internationalen Prüfvorschriften und Tests wie DIN 75200, DIN 4102, DV 899/35 (Deutschland), FAR 25.853, MVSS 25.853 (USA), AFNOR P 92-507 (Frankreich) usw. Da zu erwarten ist, daß diese Vorschriften in Zukunft noch verschärft werden, wobei neben der Nichtbrennbarkeit besonderes Gewicht auf Rauchdichte und Giftigkeit des Rauchgases im Verschwelungs-und/oder Brandfall gelegt werden wird, hat das Airbus-Konsortium im Jahre 1979 bereits eine eigene verschärfte Vorschrift, die ATS 1000.001, erarbeitet und der interessierten Industrie zugänglich gemacht. Bei einer geschätzten Lebensdauer eines Flugzeugs von mindestens 15 Jahren trägt diese Vorschrift bereits zukünftigen technischen Entwicklungen und Anforderungen Rechnung (vgl. hierzu auch TÜ 21 (1980) Nr. 2 Februar, S. 79-82 und "Die chemische Produktion", 1983, Seiten 50-53).

Die zur Zeit in der Flugzeugindustrie eingesetzten Zweikomponenten-und Einkomponentenformmassen erfüllen die verschärften Anforderungen der ATS 1000.001 allerdings noch nicht, wie sich aus der folgenden Tabelle ergibt, in der zum Vergleich die Eigenschaften einer ausgehärteten erfindungsgemäßen Formmasse mit aufgeführt sind. Die Untersuchungen sind an im Flugzeugbau üblichen Sandwich-Bauteilen aus Prepreg und Wabenmaterialien (Phenolharz-Waben) durchgeführt worden, die mit den jeweiligen Formmassen gefüllt und ausgehärtet wurden.

Tabelle 1: Vergleich verschiedener Formmassen nach ATS 1000.001

(+ erfüllt, - nicht erfüllt)

| | EPO-Formmasse 2K | EPO-Formmasse 1K* | Phenol-Formaldehyd-Harz-Formmasse 2K | erfindungsgemäße Formmasse 1K |
|---|---|---|---|---|
| Rauchgasdichte | - | - | + | + |
| toxi. Pyrolysegase | +/- | +/- | +/- | + |
| Druckfestigkeit RT | + | + | + | + |
| " 80°C | + | + | + | + |
| Nichtbrennbarkeit | +/- | +/- | + | + |
| Dichte (< 0,75) | 0,65 | 0,55 | 0,70 | 0,54 |
| Verarbeitbarkeit in Nomex-Waben | +/- | +/- | +/- | + |
| Haftung auf Prepreg aus: | | | | |
| Epoxidharz | + | + | - | + |
| Phenolharz | - | - | + | + |
| Polyimid | - | - | - | + |
| Schrumpf < 0,5% | - | - | - | + |
| Ausreißkraft bei Krafteinleitungspunkten (Inserts): | | | | |
| RT (Soll 1200 N) | - | ca. 1200 | < 1000 | > 2000 |
| 70°C (Soll 1000 N) | - | < 600 | <600 | > 2000 |

*1K: bereits angesetzte 2K-Masse, die bei sehr tiefen Temperaturen (-18°C) längere Zeit (ca. 3 Monate) stabil ist.

In der Luftfahrtindustrie werden derartige Formmassen z.B. für die Herstellung von Versteifungen und Halterungen (Inserts), Innenverkleidungen (z.B. Seiten-und Trennwände sowie Deckenverkleidungen), Fußböden, Dämm-und Verkleidungsplatten sowie Formteilen eingesetzt. Besonders bevorzugt ist hierbei die Verwendung von sogenannten Prepreg-Bauteilen (Sandwich-Waben-Konstruktionen), bei denen es sich um mit mehrlagigen Harzmatten beschichtete Phenolharz-Waben (Handelsname Nomex) handelt. Die Harzmatten (Prepregs) bestehen aus E-Glasgeweben, die mit Harzen auf Basis von Phenol/Formaldehyd, ungesättigten Polyestern, EPO und Polyimiden getränkt werden. Aus Gründen der Stabilitätsverbesserung sowie der Einsparung von Umleimern, d.h. Kantenbändern, wird häufig an den Rändern der Sandwich-Bauteile eine Randfüllmasse in die Waben gepreßt.

Eine auch den jetzt schon absehbaren zukünftigen Anforderungen genügende Formmasse müßte bei schwundfreier Aushärtung zu einem Konstruktionswerkstoff mit einer geringen Dichte von etwa 0,2 bis 0,8 g/cm³ führen, der sowohl bei Raumtemperatur als auch unter Dauertemperatureinflüssen bis 80°C bzw. 130°C hohe Druck-und Biegefestigkeiten gewährleistet. Hinzu kommen die Anforderungen für den Brand- und/oder Verschwelungsfall, nämlich Nichtbrennbarkeit, kein Tropfen, unbedeutende Rauchgasentwicklung sowie eine weitgehende nichttoxische Pyrolysegasentwicklung. Für spezielle Einsatzzwecke (z.B. Brandschutzwände im Transportraum von Flugzeugen) wäre außerdem eine höhere Temperaturbeständigkeit erforderlich, d.h. der Werkstoff müßte z.B. 10 Minuten einer Temperaturbelastung von 1000 bis 1200°C widerstehen. Schließlich ist angesichts der üblichen Verbundsysteme, in denen derartige Formmassen zum Einsatz kommen, eine optimale Verbindung oder Haftung mit den die Basis dieser Verbundsysteme bildenden Materialien wie Polymerisaten, Polykondensaten oder Polyadditionsverbindungen (z.B. ungesättigte Polyester, EPO-Harze, Phenolharze, Polyimid oder Polyurethan) unerläßlich. Eine optimale Verbindung oder Haftung ist außerdem auch auf Metallen und Materialien wie Glasfasern und Kohlefasern erforderlich oder zumindest erstrebenswert.

Die aus dem Stand der Technik bekannten Formulierungen und Systeme, die in zahlreichen Patentschriften bzw. Patentanmeldungen beschrieben werden, erfüllen jedoch nur einzelne der genannten Anforderungen oder Kombinationen von Teilbereichen dieser Anforderungen.

So werden in der europäischen Patentanmeldung 157 143 feuerhemmende Verschlußmassen beschrieben, die aus Melaminen und einer Reihe von Füllstoffen bestehen, aber abgesehen von anderen Unzulänglichkeiten Dichten von 0,7 bis 1,0 g/cm³ aufweisen.

In der DE-OS 35 19 581 werden Ablations-Überzüge aus amingehärteten EPO-und Polysulfidharzgemischen mit Pre-ox-Kohlenstoffasern als Versteifung beschrieben, die zwar hochtemperaturbeständig sind, jedoch Dichten weit über 1,0 g/cm³ aufweisen.

In der DE-OS 27 14 006, DE-OS 27 13 984 und DE-OS 27 40 504 werden Formmassen beschrieben, die aus Polyisocyanat und Hohlkugeln bestehen. Diese werden unter Zutritt von Luftfeuchtigkeit und gegebenenfalls nach Zusatz von Wasser ausgehärtet. Vorzugsweise werden kurz vor der Verarbeitung Phosphorsäure und/oder Phosphate bzw. deren wässrige Lösungen oder wässrige Alkalisilikatlösungen zugesetzt. Die in diesen Patentanmeldungen beschriebenen Formmassen weisen im ausgehärteten Zustand nur verhältnismäßig geringe Druckfestigkeiten auf und sind nur lagerbeständig in Form von Vormischungen, bestehend aus Polyisocyanaten und Hohlkugeln. Sie sind jedoch nicht stabil als feuchtigkeitshärtende Einkomponenten-Materialien und bieten dementsprechend die mit Einkomponenten-Materialien verbundenen Verarbeitungsvorteile nicht. Versuche ergaben, daß z.B. Mischungen von Hohlkugeln mit 2% Polyisocyanaten keine stabilen Massen ergaben. Nach dem Verfahren gemäß Anspruch 2 der DE-OS 27 14 006 hergestellte Massen (Platten mit einer Dicke von 5 bis 10 mm) hielten einer Temperaturbelastung von 1080°C über einen Zeitraum von 1 Minute nicht stand.

Der Erfindung liegt die Aufgabe zugrunde, die oben dargelegten Mängel der bekannten Formmassen zu vermeiden bzw. Eigenschaftsverbesserungen insbesondere im Brandschutzbereich zu erzielen. Insbesondere liegt der Erfindung die Aufgabe zugrunde, Formmassen als Einkomponenten-Materialien zu schaffen, die neben den bereits oben genannten Eigenschaften im ausgehärteten Zustand hohe Druckfestigkeiten nicht nur bei Raumtemperatur sondern auch bei erhöhten Temperaturen bis 80°C liefern, höchste Anforderungen an die Brennbarkeit, Rauchgasdichte und Entwicklung von toxischen Pyrolysegasen im Verschwelungs-und/oder Brandfall erfüllen, nicht nachflammen, nicht tropfen, gegen Wasser, Hydraulikflüssigkeit und Kerosin beständig sind, eine ausgezeichnete Anbindung an jegliches gebräuchliches Prepreg-Material, Metalle und Fasermaterialien liefern und schwundfrei härten.

Zur Lösung dieser Aufgabe wird eine Einkomponenten-Formmasse der eingangs genannten Art vorgeschlagen, die gekennzeichnet ist durch:

A) 40 bis 80 Gew.% des Isocyanurats des 1,6-Hexamethylendiisocyanats mit einem NCO-Gehalt von 18 bis 24 Gew.%,

B) 0 bis 20 Gew.% Roh-MDI und/oder Präpolymer aus Polyol und Roh-MDI und/oder Isophorondiisocyanat, gegebenenfalls in Kombination mit dimerisiertem Triazin des TDI, mischpolymerem Triazin von TDI und HDI und/oder Naphthalindiisocyanat,

C) 5 bis 20 Gew.% einer Mischung aus:

a) 50 bis 100 Gew.% sekundärem Ammoniumphosphat, wobei der Anteil des sekundären Ammoniumphosphats 80 bis 100 Gew.% beträgt, wenn die Komponente C) in der Formmasse insgesamt nur in einer Menge von 5 bis 10 Gew.% vorhanden ist,

b) 0 bis 20 Gew.% primärem Ammoniumphosphat,

c) 0 bis 20 Gew.% Zeolith und/oder kristallinem Alkalisilikat,

d) 0 bis 20 Gew.% feinteiliger Kieselsäure,

e) 0 bis 20 Gew.% $Ca_3(PO_4)_2$,
f) 0 bis 20 Gew.% Azodicarbonamid,
g) 0 bis 20 Gew.% calciniertem Calciumoxid,
D) 0 bis 50 Gew.% Füllstoff und
E) 0 bis 5 Gew.% Beschleuniger.

Als Komponente A dient das Isocyanurat des 1,6-Hexamethylendiisocyanats. Im bevorzugten Fall des ideal trimerisierten 1,6-Hexamethylenisocyanurats handelt es sich um ein Polyisocyanat-Isocyanurat mit der folgenden Formel :

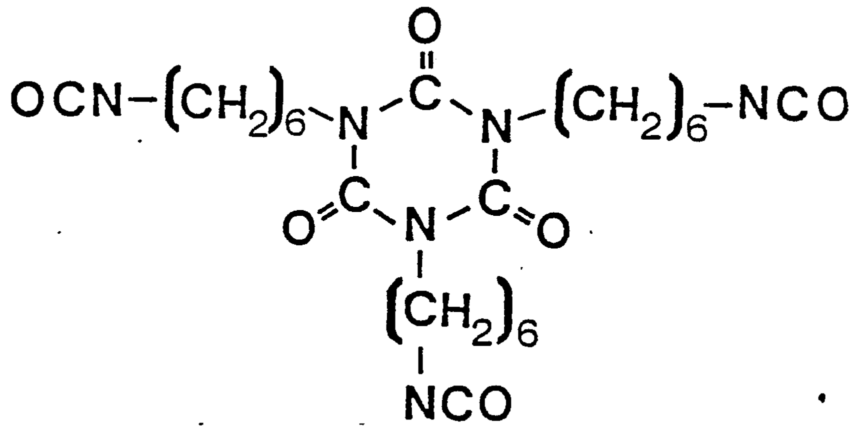

Geeignet sind selbstverständlich auch aus dieser Verbindung resultierende Vernetzungsprodukte. Das Isocyanurat des 1,6-Hexamethylendiisocyanats ist im Handel erhältlich und enthält normalerweise weniger als 0,5 Gew.% monomeres 1,6-Hexamethylendiisocyanat. Der NCO-Gehalt beträgt 18 bis 24 Gew.% und vorzugsweise 20 bis 22 Gew.%. Üblicherweise liegt die Dichte bei etwa 1,2 g/cm³, und die Viskosität beträgt geeigneterweise etwa 1000 bis 3000 mPas, wobei die Einhaltung einer geeigneten Viskosität selbstverständlich für die Verarbeitbarkeit von Bedeutung ist. Der Gehalt an dem bevorzugten ideal trimerisierten 1,6-Hexamethylendiisocyanat ist bei den verschiedenen Handelsprodukten unterschiedlich und kann z.B. 98% und mehr betragen.

Bei "Roh-MDI" (Komponente B) handelt es sich um Polyisocyanate auf Diphenylmethandiisocyanat-Basis, wie sie durch Anilin-Formaldehyd-Kondensation und anschließende Phosgenierung hergestellt werden. Dabei werden flüchtige Anteile und ein Teil des gebildeten Diphenylmethandiisocyanats abdestilliert. Roh-MDI stellt dementsprechend ein Polyisocyanat aus dem Sumpf der technischen Herstellung bzw. Destillation von Diphenylmethandiisocyanaten dar (vgl. z.B. DE-OS 27 14 006, Seiten 9, 18 und insbesondere 28, Kunststoffhandbuch, Band 7, Polyurethane, 2. Auflage, 1983, Seite 63). Erfindungsgemäß ist es vorteilhaft, wenn das Roh-MDI eine hohe Funktionalität besitzt, d.h. der NCO-Gehalt des Roh-MDI beträgt vorteilhafterweise 28 bis 33 Gew.%, wenngleich auch Materialien mit einem niedrigeren NCO-Gehalt wie z.B. 20 Gew.% brauchbar sind. Die Dichte (20°C) von Roh-MDI beträgt üblicherweise 1,2 ± 0,1 g/cm³, während die Viskosität gewöhnlich bei etwa 130 mPas liegt.

Anstelle von Roh-MDI kann als Komponente B erfindungsgemäß auch ein Präpolymer eingesetzt werden, das durch Umsetzung von Roh-MDI mit Polyol in bekannter Weise erhältlich ist. Für die Herstellung von Präpolymeren geeignete Polyole sind dem Fachmann bekannt und bedürfen deshalb keiner weiteren Erläuterung (vgl. z.B. DE-OS 27 14 006, Seite 10 ff.).

Anstelle von Roh-MDI bzw. Präpolymer aus Polyol und Roh-MDI oder in Kombination mit Roh-MDI bzw. Präpolymer aus Polyol und Roh-MDI kann erfindungsgemäß in Komponente B auch Isophorondiisocyanat - (IPDI) eingesetzt werden. Auch dieses Produkt ist im Handel erhältlich.

In einer weiteren Ausführungsform kann in der Komponente B das Roh-MDI und/oder Isophorondiisocyanat mit dimerisiertem Triazin des TDI, mischpolymerem Triazin von TDI und HDI und/oder Naphthalindiisocyanat (NDI) kombiniert werden, wobei diese zusätzlichen Bestandteile als Feststoffe eingesetzt werden. Dimerisiertes Triazin des TDI ist im Handel beispielsweise gelöst in Ethyl -oder Butylacetat erhältlich und besitzt folgende idealisierte Struktur:

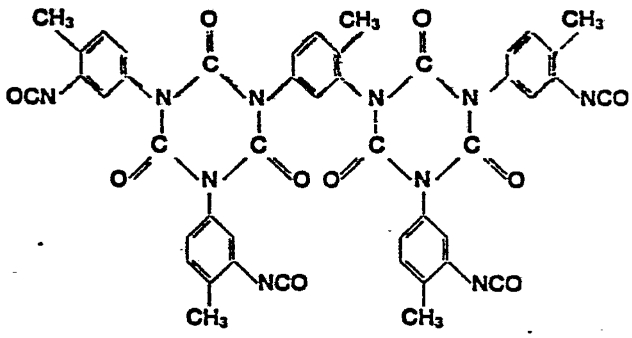

Mischpolymeres Triazin von TDI und HDI ist ebenfalls im Handel gelöst in Ethyl-oder Butylacetat erhältlich, und besitzt die folgende idealisierte Struktur:

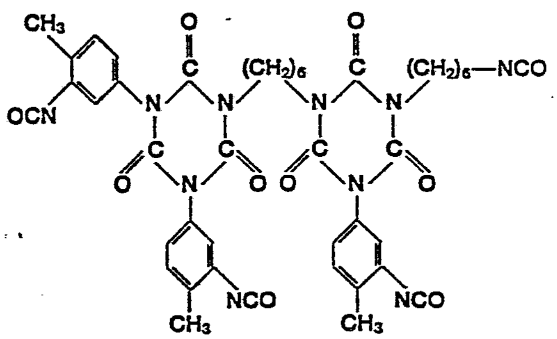

Vorzugsweise liegt die Komponente B in der erfindungsgemäßen Formmasse in einer Menge von 1 bis 10 Gew.% und insbesondere 2 bis 6 Gew.% vor, da dies zu optimalen Druckfestigkeiten der ausgehärteten Formmasse führt.

Die Komponente C ist maßgeblich für die äußerst vorteilhaften Eigenschaften der ausgehärteten erfindungsgemäßen Formmasse hinsichtlich Nichtbrennbarkeit verantwortlich. Das sekundäre Ammoniumphosphat (Diammoniumhydrogenphosphat), $(NH_4)_2HPO_4$) kann sowohl allein als auch in Kombination mit primärem Ammoniumphosphat (Ammoniumdihydrogenphosphat, $NH_4H_2PO_4$), Zeolith, insbesondere Natrium- oder Kaliumalumosilikaten, kristallinen Alkalisilikaten wie Na-und K-Silikat, feinteiliger Kieselsäure, insbesondere pyrogener Kieselsäure, Calciumorthophosphat ($Ca_3(PO_4)_2$), Azodicarbonamid und/oder calciniertem Calciumoxid verwendet werden. Die Mischung besteht dabei aus mindestens 50 Gew.% und vorzugsweise 80 Gew.% sekundärem Ammoniumphosphat sowie bis zu 50 Gew.% bzw. 20 Gew.% der übrigen Komponenten, wobei der Anteil des sekundären Ammoniumphosphat mindestens 80 Gew.% beträgt, wenn die Komponente C in der erfindungsgemäßen Formmasse insgesamt nur in einer Menge von 5 bis 10 Gew.% vorhanden ist. Nach den bisherigen Erfahrungen hat sich insbesondere eine Mischung aus sekundärem Ammoniumphosphat, kristallinem Alkalisilikat, pyrogener Kieselsäure und Calciumorthophosphat als besonders brauchbar erwiesen.

Für die Lagerstabilität der erfindungsgemäßen Formmasse ist ausschlaggebend, daß der Wassergehalt der Einzelbestandteile der Formmasse insgesamt nicht mehr als etwa 0,2 Gew.%, bezogen auf das Gewicht der Formmasse, beträgt und die Komponente C eine bestimmte Korngrößenverteilung aufweist. Die Korngröße der Komponente C liegt bevorzugt bei 0,5 bis 200 µm und insbesondere 1 bis 150 µm mit einem Maximum bei etwa 50 µm. Besonders bevorzugt ist eine solche Korngrößenverteilung, daß 50 bis 70 Gew.% eine Größe von 20 bis 50 µm, nicht mehr als 30 Gew.% eine Größe von weniger als 20 µm und nicht mehr als 50 Gew.% eine Teilchengröße im Bereich von 50 bis 100 µm besitzen. Vergleichsversuche haben ergeben, daß beispielsweise Vermahlungen mit einem Anteil von 80 Gew.% unter 20 µm katalytische Oberflächeneffekte auf den Ammoniumphosphaten auslösten, so daß aufgrund von Ammoniakentwicklung keine lagerstabile Einkomponenten-Formmasse erhältlich war.

Die angegebene Korngrößenverteilung gilt für die Komponente C insgesamt, vorzugsweise aber auch für jeden ihrer Mischungsbestandteile a) bis g). Sofern die in Komponente C eingesestzten Materialien nicht bereits im Handel in der gewünschten Korngröße erhältlich sind, kann die Korngrößeneinstellung in herkömmlicher Weise, z.B. durch Vermahlung, erfolgen.

Der feinteiligen Kieselsäure oder dem Calciumorthophosphat in der Komponente C kommt im wesentlichen eine stabilisierende Wirkung zu, so daß Komponente C bei der Herstellung der erfindungsgemäßen Formmasse in Form einer rieselfähigen Vormischung eingesetzt werden kann. Unter diesem Gesichtspunkt geeignete Mengen dieser Bestandteile betragen etwa 1 bis 3 Gew.%, wobei darauf hingewiesen wird, daß sich die Gew.%-Angaben zu den Mischungsbestandteilen der Komponente C sowohl in den Ansprüchen als auch der Beschreibung nur auf die Komponente C beziehen, d.h. die gesamte Komponente C entspricht 100 Gew.%.

Als für Komponente D geeignete Füllstoffe kommen praktisch alle aus dem Stand der Technik für derartige Formmassen bekannten Füllstoffe in Abhängigkeit von der vorgesehenen Verwendung der erfindungsgemäßen Formmasse in Frage. Beispiele für derartige Füllstoffe sind Talkum, Gesteinsmehl, Kreide, nichtbrennbare Kunststoffgranulate, anorganische Feststoffe wie CaO, Mg $(OH)_2$, Al $(OH)_3$, Metallflocken, -späne und pulver, Zeolithe usw.

Aufgrund der mit diesen erhaltenen guten Ergebnisse sei insbesondere auf Flugasche und Mikrohohlkugeln aus Glas oder Phenolharzen hingewiesen, welche eine Teilchengröße von 5 bis 200 µm und eine wahre Dichte von 0. 15 bis 0,7 g/cm$^3$ aufweisen. Geeignet sind die üblichen Handelsprodukte, die dem Fachmann geläufig sind und dementsprechend keiner näheren Erläuterung bedürfen (bezüglich Mikrohohlglaskugeln siehe z.B. Kunststoffe 75 (1985) 7, Seiten 421 bis 424). Dabei ist es unter dem Gesichtspunkt des Brandschutzes besonders bevorzugt, solche Hohlkugeln in der erfindungsgemäßen Formmasse zu verwenden, die mit nicht brennbaren oder brandlöschenden Gasen gefüllt sind. Hierbei handelt es sich in der Regel um Stickstoff und Kohlendioxid, aber es gibt auch mit Edelgasen wie Argon gefüllte Hohlkugeln, die allerdings unter wirtschaftlichen Gesichtspunkten kaum in Frage kommen.

Sehr gut geeignete Füllstoffe sind auch Kohlenstoff-, Glas-und Metallfasern. Die Verwendung von Kohlenstofffasern ist insbesondere dann von Vorteil, wenn bei geringer Dichte der ausgehärteten Formmasse eine hohe Druckfestigkeit erforderlich. Besonders geeignet sind Kohlenstoffasern und sogenannte Pre-ox-fasern, die aus Polyacrylnitril hergestellt werden (vgl. z.B. DE-OS 35 19 581, Seite 6 und 7), mit einer Dicke von 0,001 bis 0,1 mm und Schnittlängen von 0,005 bis 50 mm und insbesondere 0,1 bis 5 mm. Als Metallfasern kommen hauptsächlich Fasern aus Kupfer und rostfreiem Stahl infrage, wobei letztere vorzugsweise einen Durchmesser von 4 bis 12 µm und eine Schnittlänge von 1 bis 12 mm besitzen.

Gut geeignete Füllstoffe sind ferner Silicumdioxid oder $B_4C$ (Tetraborcarbid) mit Körnungen von 1 bis 70 µm.

Sehr gut geeignet als Füllstoff sind auch Aluminiumflocken. Ferner haben sich sogenannte "cobweb-whiskers" als äußerst wertolle Füllstoffe erwiesen. Es handelt sich hierbei um Fasermaterialien auf Basis von $SiO_2$, Si, SiC und C, die aus miteinander verflochtetenen Einzelfasern im Submikron-und Mikronbereich bestehen. Alternativ können die "cobweb-whiskers" auch aus Siliciumcarbidfasern im Gemisch mit Siliciumcarbidpartikeln bestehen (vgl. z.B. die Firmenschriften der Firma Norwegian Talc Deutschland GmbH betreffend die Faser-Additive "XEVEX" und "XPW 2").

Als gut geeignete Füllstoffe haben sich außerdem Melaminharzpulver erwiesen, die im Handel erhältlich sind. Das gleiche gilt für geschäumte Tone, die beispielsweise unter der Bezeichnung "NORPRIL" im Handel sind (vgl. das Datenblatt der Firma Norwegian Talc Deutschland GmbH vom September 1986).

Erfindungsgemäße Formmassen, die keine Komponente D, also keinen Füllstoff enthalten, eignen sich als nichtbrennbares Laminatharz für Prepreg-Bauteile. Geringe Füllstoffgehalte sind von Vorteil, wenn die erfindungsgemäßen Formmassen zu Schäumen verarbeitet werden sollen. Besonders hat sich hier die Verwendung von Mikrohohlglaskugeln in einer Menge von etwa 5 bis 20 Gew.% bewährt. Die Mikrohohlglaskugeln dienen in diesem Zusammenhang auch zur Porenregulierung des herzustellenden Schaums. Vorzugsweise beträgt die Dichte der Mikrohohlglaskugeln in der erfindungsgemäßen Formmasse weniger als 0,4 g/cm$^3$.

Wie bereits oben erwähnt, richtet sich die Auswahl des jeweiligen Füllstoffs nach der vorgesehenen Anwendung der erfindungsgemäßen Formmasse. Dabei ist es dem Fachmann weitestgehend geläufig, in welcher Weise und in welchem Ausmaß er die Eigenschaften der Formmasse durch Auswahl von Füllstoffen beeinflussen kann (vgl. hierzu auch die weiter unten folgenden Beispiele). Es wurde allerdings gefunden, daß mit der erfindungsgemäßen Formmasse die grundsätzlich erwarteten Effekte häufig in einer überraschend ausgeprägten Form und einem überdurchschnittlichen Ausmaß eintreten.

In Komponente E können als Beschleuniger bzw. Katalysator alle hierfür bekannten Materialien, wie Amine, Dibutyl zinndilaurat, Zinnmercaptat usw. verwendet werden (vgl. z.B. DE-OS 27 14 006, Seiten 20 und 21 und DE-PS 23 10 559, Spalte 7), wobei tertiäre Amine bevorzugt sind.

Die Herstellung der erfindungsgemäßen Formmasse bietet für den Fachmann keine Besonderheiten und erfolgt durch Zusammengeben und herkömmliches Vermischen der Komponenten A und C sowie der Komponenten B, D und E, soweit letztere vorhanden sind. Wesentlich ist, daß Feuchtigkeit weitgehend ausgeschlossen ist. Vorzugsweise erfolgt dementsprechend die Herstellung der erfindungsgemäßen Formmasse in einer Atmosphäre eines getrockneten Schutzgases wie Stickstoff. Ferner ist es in der Regel erforderlich, bei Verwendung von Mikrohohlkugeln diese zunächst zu trocknen, beispielsweise vier Stunden bei 200°C. Wie bereits oben erwähnt, ist es für eine ausreichende Lagerstabilität wesentlich, daß der Wassergehalt der Einzelbestandteile der erfindungsgemäßen Formmasse insgesamt nicht mehr als etwa 0,2 Gew.% beträgt.

Die Reinhenfolge in der die Bestandteile der erfindungsgemäßen Formmasse zusammengegeben werden, ist normalerweise ohne Bedeutung. Bei Verwendung von Mikrohohlglaskugeln als Füllstoff hat es sich allerdings besonders bewährt, wenn man zunächst die Mikrohohlglaskugeln vorlegt und dann die Komponente A und/oder B in beliebiger Reihenfolge und dann die weiteren Bestandteile zusetzt. Ferner ist es bevorzugt, die Komponenten B und C, wie für Komponente C bereits oben erwähnt, in denjenigen Fällen vorzufertigen, in denen es sich bei diesen Komponenten um Mischungen mehrerer Bestandteile handelt.

Das Vermischen der die erfindungsgemäße Formmasse bildenden Bestandteile kann in hierfür üblichen Vorrichtungen durchgeführt werden. Geeignet sind beispielsweise Zwangskneter, Doppel-Z-Zwangskneter, Planetenmischwerke, geeignete Extruder, Trommelmischer, Nautamischer usw. Das Kneten wird so lange fortgesetzt, bis eine homogene Masse erhalten wird, was durch Prüfung auf einer Glasscheibe unter dem Mikroskop feststellbar ist. In der Regel sind Knetzeiten von 3 Min. völlig ausreichend. Bei einem 200 l Ansatz beträgt die max. Knetdauer gewöhnlich nicht mehr als 15 Min., wobei in Abhängigkeit von den eingesetzten Materialien aber in der überwiegenden Zahl der Fälle sehr viel kürzere Knetzeiten ausreichend sind.

Die so hergestellte homogene Formmasse wird mit Hilfe üblicher Pressen in herkömmlicher Weise abgefüllt, z.B. in Kartuschen oder Gebinden (z.B. Hobbocks) . Die Abfüllung kann auch in Behälter aus Alu-Verbundfolie sowie Polyethylen oder Polypropylen erfolgen, wobei Polypropylen gegenüber Polyethylen wegen der geringeren Wasserdampfdurchlässigkeit bevorzugt ist.

Die erfindungsgemäße Formmasse ist, sofern sie nicht aus praktischen oder ästhetischen Gründen gefärbt ist, eine farblose bis weiße, niedrigviskose spachtelförmige Masse, d.h. sie ist nicht fließfähig, sondern steht. Allerdings ist sie kaltverformbar und ihre Viskosität ist immer noch so ausreichend, daß sie noch in kleinste Waben (z.B. Schlüsselweite 2,8 mm) einpreßbar ist.

Da es sich bei der erfindungsgemäßen Formmasse um ein Einkomponentenmaterial handelt und da die erfindungsgemäße Formmasse kaltverformbar ist, bietet sie selbstverständlich große verarbeitungstechnische Vorteile. Hinzukommt, daß sie feuchtigkeitshärtend ist und bei der Härtung nicht nur keinen Schwund zeigt, sondern sogar expandiert. Dies hat den großen Vorteil, daß selbst dann, wenn die für die Aushärtung verwendete Form nicht optimal ausgefüllt ist, mit der erfindungsgemäßen Formmasse Produkte erhalten werden, die trotzdem genau der durch das Formwerkzeug vorgegebenen Form entsprechen.

Ein weiterer für den Fachmann offensichtlicher Vorteil der erfindungsgemäßen Formmasse besteht darin, daß sie lösungsmittelfrei ist. Dadurch vereinfacht sich die Verarbeitung der erfindungsgemäßen Formmasse ganz erheblich, da insbesondere angesichts der immer strenger werdenden Umweltschutzvorschriften lösungsmittelhaltige Formmassen einen erheblichen zusätzlichen Aufwand und damit verbundene Kosten erforderlich machen.

Die Aushärtung der erfindungsgemäßen Formmasse erfolgt nach Kaltverformung durch Stampfen, Walzen, Pressen, Extrudieren, Einrütteln, Einblasen usw. bei Raumtemperatur oder erhöhten Temperaturen durch Einwirkung von Luftfeuchtigkeit bzw. Wasserdampf. Bei Raumtemperatur erfolgt die Härtung innerhalb von etwa 7 Tagen oder bei Zusatz der oben genannten Beschleuniger in Mengen von etwa 1 bis 3 Gew.% innerhalb von einem Tag. Vorzugsweise erfolgt die Aushärtung jedoch bei 110 bis 200°C (z.B. 130°C) ohne Beshleuniger in etwa 0,5 bis 3 Stunden. Hierbei ergibt sich in der Regel eine nicht unerhebliche Nachhärtung, so daß die zunächst erzielten Druckfestigkeiten sich beispielsweise nach vier Wochen noch um etwa 20 bis 30% und sogar bis zu 50% erhöhen können. Selbstverständlich wird der Fachmann bei der Härtung der erfindungsgemäßen Formmasse die Formteilgeometrie und die Wärmeleitfähigkeit des Formteils berücksichtigen und die erforderliche Härtungszeit entsprechend wählen - (vergl. hierzu z.B. DE-OS 27 14 006, Seite 23). Im übrigen erfolgt die Härtung bei den üblichen Drücken, z.B. Atmosphärendruck (üblich sind normalerweise Drücke von etwa 0,5 bis 50 bar).

Wie bereits oben erwähnt, expandiert die erfindungsgemäße Formmasse bei der Härtung. Dies erlaubt die Herstellung von ausgehärteten Produkten mit unterschiedlichen Raumgewichten, indem man gleiche Mengen erfindungsgemäße Formmasse in verschieden großen Volumina oder unterschiedliche Mengen erfindungsgemäße Formmasse in demselben Volumen aushärtet. Bei einem Druck von etwa 1 bar lassen

sich so beispielsweise in einer geschlossenen Form Formkörper mit einem Raumgewicht von 500 bis 600 $kg/m^3$ herstellen. Erlaubt man ein stärkeres Schäumen bei der Aushärtung werden Formkörper mit noch geringeren Raumgewichten erhalten. Die Grenze zu Hartschäumen wird bei einem Raumgewicht von etwa 300 $kg/m^3$ erreicht.

Wenn die relative Luftfeuchtigkeit bei der Aushärtung geringer als etwa 40% ist, empfiehlt es sich, Wasser in Konzentrationen von 1 bis 10 Gew.% zuzusetzen, wobei die Wassermenge nicht definiert werden muß. Anstelle von Wasser können auch wässrige Laugen wie z.B. Natronlauge und Kalilauge oder alkalisch reagierende Verbindungen wie Natrium-und/oder Kaliumsilikate in Form ihrer wässrigen Lösungen zugesetzt werden. Gut geeignet sind auch Ammoniumphosphatlösungen. Gewöhnlich werden 0,5 bis 5 n Lösungen eingesetzt.

Wie sich bereits aus den obigen Ausführungen ergibt, sind die Anwendungs-und Einsatzmöglichkeiten der erfindungsgemäßen Formmasse äußerst vielfältig, d.h. sie eignet sich als Konstruktionswerkstoff und insbesondere als Brandschutzkonstruktionswerkstoff für die verschiedensten Zwecke (eine ganze Reihe von auch für erfindungsgemäße Formmasse möglichen Anwendungen sind beispielsweise in der DE-OS 27 14 006 in dem die Seiten 25 und 26 verbindenden Absatz aufgeführt). So kann die erfindungsgemäße Formmasse zur Herstellung von Schäumen (Hartschäume mit Raumgewichten zwischen 150 und 300 $kg/m^3$) dienen. Ein besonders wichtiges Anwendungsgebiet ist die Herstellung von Verbundsystemen oder Sandwich-Konstruktionen, die aus Oberflächen aus Glasgewebe-oder Kohlenstoffasernprepreg und Kernen aus Formmassen oder Schäumen mit Raumgewichten von 150 bis 1000 $kg/m^3$ bestehen. In diesem Zusammenhang ist besonders auf die Verarbeitung der erfindungsgemäßen Formmasse in Verbindung mit insbesondere im Flugzeugbau verwendeten Wabenmaterialien hinzuweisen. Die erfindungsgemäße Formmasse kann in diese Wabenmaterialien eingepreßt und dann darin ausgehärtet werden, was zu Formteilen großer Härte, Druckfestigkeit und ausgezeichneter Brandschutzeigenschaften führt.

Produkte mit besonders guten Eigenschaften werden beispielsweise auch erhalten, wenn die erfindungsgemäße Formmasse mit Kohlenstoff-oder Glaskurzfasern mit einer Länge von 1 bis 30 mm und vorzugsweise 1 bis 6 mm gefüllt sind. Als Kohlenstoff-Fasern eignen sich beispielsweise teiloxidierte Polyacrylnitrilfasern (Pre-ox-Fasern) oder vollkarbonisierte Pechfasern.

Für viele Anwendungszwecke empfiehlt es sich, die erfindungsgemäße Formmasse mit Glas-oder Kohlenstoff-Fasergeweben zu kombinieren. Hierfür eignen sich beispielsweise Satin-, Leinwand-, Atlas-, Roving-, Unidirektional-Gelege und -Stapelfasergewebe. Ferner können Vliese und Schlauchgeflechte verwendet werden. Als Gewebematerial eignen sich auch Aramid-Glasfasern oder Poly )p-phenylenterephthalamid)-Kohlenstoff-Fasergewebe (zu Aramid und PPDT vgl. z.B. Neue polymere Werkstoffe, 1969-1974, Carl Hanser Verlag 1975, Kapitel 9.1 und 9.2). Je nach Anwendungszweck kann man derartige Gewebe, Vliese oder Geflechte mit der erfindungsgemäßen Formmasse füllen und dann aushärten oder man kann diese Gewebe, Vliese und Geflechte außen auf die Formmasse aufbringen und diese dann aushärten. Letzeres kann beispielsweise in der Weise erfolgen, daß man ein Formwerkzeug mit einem der genannten Gewebe, Vliese oder Geflechte auslegt und dann die erfindungsgemäße Formmasse einbringt und aushärtet. Auf diese Weise wird ein äußerst stabiler Verbund zwischen der ausghärteten Formmasse und dem Gewebe, Vlies oder Geflecht gebildet. Die eingesetzten Gewebe und Vliese besitzen vorzugsweise Gewichte zwischen 50 bis 600 $g/m^2$ und vorwiegend zwischen 100 und 200 $g/m^2$.

Wie auch die folgenden Beispiele zeigen, besitzen die aus der erfindungsgemäßen Formmasse hergestellten Produkte ausgezeichnete Nichtbrennbarkeitseigenschaften und halten einem Brandtest in Form einer 5-minütigen Beflammung (1080°C) soweit stand, daß ein Tropfen, Nachflammen oder Durchbrennen nicht beobachtet wird.

Selbstverständlich eignet sich die erfindungsgemäße Formmasse auch ganz grundsätzlich als Füllmasse und Spachtel sowie als Beschichtungsmaterial. Im Vordergrund steht allerdings die Verwendung in Verbundkonstruktionen aus Geweben und Massen. Ohne in Einzelheiten zu gehen, seien hier die wesentlichsten Anwendungsmöglichkeiten stichpunktartig aufgezählt:

Versteifung von Prepreg-Waben-Sandwich-Bauteilen für Platten und Bauteile in der Flugzeugindustrie, Schiffen, Bahnen und anderen Fahrzeugen (z.B. Rennwagen und Tanklastzügen), wo Brandschutz erforderlich ist. Für die PKW-Industrie: Motorabkapselungen, Auskleidung von Motorhauben gegen Vergaserbrände oder ähnliche Vorkommnisse. Bauindustrie: Feuerhemmende Verschlüsse von Mauerdurchbrüchen, Verschlüsse von Kabelschächten, Klimaanlagenschächte, Deckenplatten, Brandschutzwände, Füllungen für Brandschutztüren oder in stärkerer Ausführung von 30 bis 50 mm als Türen;

Verkleidungen von Datenschutzschränken und Panzerschränken.

Die mit der erfindungsgemäßen Formmasse nach deren Aushärtung erhaltenen Produkte können gesägt, gefräst, gebohrt, genagelt, geschraubt, geklebt und in jeder beliebigen anderen Weise mechanisch bearbeitet werden (vergl. wiederum DE-OS 27 14 006, unterer Absatz auf Seite 26, wo Bearbeitungsbeispiele angegeben sind, die auch auf die erfindungsgemäße Formmasse zutreffen).

Es bedarf keiner ausdrücklichen Erwähnung, daß die erfindungsgemäße Formmasse selbstverständlich auch im Zusammenhang mit auf dem hier vorliegenden technischen Gebiet üblichen Hilfsmitteln verarbeitet werden kann, wobei diese in die Formmasse als solche einverleibt oder beispielsweise bei der Verarbeitung und Aushärtung zugegeben werden können. Derartige Hilfsmittel sind dem Fachmann geläufig, so daß auf Erläuterungen hierzu verzichtet werden kann (vergl. z.B. DE-OS 27 14 006, Seiten 20 bis 22).

In diesem Zusammenhang ist darauf hinzuweisen, daß es besonders vorteilhaft ist, die erfindungsgemäße Formmasse mit Polykondensationsprodukten, wie Phenolharzen, bei denen eine Wasserabspaltung stattfindet, im Verbund auszuhärten. Interessant ist ferner, daß eine aushärtende Wirkung mit überschüssigen Monomeren (z.B. Styrol) der Laminate (Prepeg-Bauteile) erzielt wird. Die Wechselwirkung mit beispielsweise Styrol führt zu einer extrem starken Verbindung mit dem Laminat. Die zuvor genannten Eigenschaften der erfindungsgemäßen Formmasse stellen einen erheblichen Unterschied zu den bekannten Formmassen (beispielsweise DE-OS 27 14 006) und dem auf dem Markt befindlichen Rand-und Kernfüllmassen auf Epoxidharzbasis sowie Formulierungen mit Phenolharzkomponenten (s. oben) dar, die entweder die ATS 1000.001 oder die erforderlichen Anbindungen von Prepregs an Polykondensationsprodukte wie Phenolharzmassen nicht erfüllen.

Schließlich sei noch erwähnt, daß die erfindungsgemäße Formmasse nach Aushärtung eine sehr gute Anbindung, Haftfestigkeit und Verträglichkeit auf allen handelsüblichen Kunststoffen aufweist, sogar auf Polyolefinen, Teflon (PTFE) und ähnlichen läßt sich eine brauchbare Haftung erzielen. Auch auf Metall werden zufriedenstellende Haftfestigkeiten erzielt, so daß die erfindungsgemäße Füllmasse auch zum Aufbau von Sandwich-Bauteilen mit Metallaußenflächen und einem Kern aus Füllmasse verwendet werden können. Geeignete metallische Werkstoffe sind z.B. Stahl, Aluminium usw.

Im folgenden soll die Erfindung anhand von Beispielen näher erläutert werden. Sofern nichts anderes angegeben ist, sind die Mengen und -Prozentangaben in den folgenden Beispielen immer auf das Gewicht bezogen.

## Beispiel 1

Es wurde eine 1-Komponenten-Formmasse aus den Komponenten A, C und D hergestellt. Dazu wurden 45 g handelsübliches Isocyanurat des 1,6-Hexamethylendiisocyanats mit einem NCO-Gehalt von 21,5% (im folgenden durchgehend in allen Beispielen nur noch als Isocyanurat bezeichnet), 5 g Diammoniumhydrogenphosphat, $(NH_4)_2HPO_4$, und 50 g Mikrohohlglaskugeln mit einer Dichte von 0,35 g/cm³ gemischt. Unter Zusatz von etwa 3,2 Gew.% Wasser wurde die so erhaltene homogene Mischung dann in einer geschlossenen Form eine Stunde lang bei 155°C gehärtet. Das Raumgewicht des ausgehärteten Produkts betrug 420 kg/m³ und es wurde eine Druckfestigkeit bei Raumtemperatur von 14,1 N/mm² ermittelt.

## Beispiel 2

Es wurde eine Einkomponenten-Formmasse aus den Komponenten A, B, C und D hergestellt. Zu diesem Zweck wurde 52g Isocyanurat gemäß Beispiel 1, 4,5 g Roh-MDI mit einem NCO-Gehalt von etwa 31 Gew.%, 14,5 g Diammoniumhydrogenphosphat, $(NH_4)_2HPO_4$, 0,5g kristallines Kaliumsilikat mit einem nominalen Porendurchmesser von 3 Å, 0,3 g pyrogene Kieselsäure und 28,2 g Mikrohohlglaskugeln mit einer Dichte von 0,38 g/cm³ homogen gemischt. Die Aushärtung erfolgte wiederum in einer geschlossenen Form und zwar 3 Stunden lang bei 135°C. Das ausgehärtete Produkt besaß ein Raumgewicht von 780 kg/m³ sowie eine Druckfestigkeit von 62,2 N/mm² bei Raumtemperatur bzw. 33,1 N/mm² bei 80°C.

Beispiel 3

Es wurde eine Einkomponenten-Formmasse aus den Komponenten A, B, C und D hergestellt. Zu diesem Zweck wurden 55,5 g Isocyanurat gemäß Beispiel 1, 4,0 g Roh-MDI, 15,0 g Diammoniumhydrogenphosphat, $(NH_4)_2HPO_4$, 0,9 g $Ca_3(PO_4)_2$, 21,4 g Pre-ox-Fasern mit einer Faserlänge von 3 bis 6 mm unter Zusatz von 3,2 g Wasser homogen vermischt. Die Härtung der so erhaltenen Formmasse erfolgte unter den gleichen Bedingungen wie in Beispiel 2. Das ausgehärtete Produkt besaß ein Raumgewicht von 800 kg/m³ und eine Druckfestigkeit von 75,1 N/mm² bei Raumtemperatur.

Beispiel 4

Es wurden drei Formmassen mit den in der folgenden Tabelle angegebenen Zusammensetzungen hergestellt, wobei unterschiedliche Mikrohohlglaskugeln in unterschiedlichen Mengen verwendet und der Einfluß dieser Veränderungen bei der Füllstoffkomponente D hinsichtlich Raumgewicht, Druckfestigkeit und E-Modul untersucht wurden. Die erhaltenen Ergebnisse sind ebenfalls in der folgenden Tabelle angegeben.

| | A | B | C |
|---|---|---|---|
| Isocyanurat (Gew.%) | 50,0 | 52,0 | 59,0 |
| Roh-MDI (Gew.%) | 4,3 | 4,4 | 5,0 |
| $(NH_4)_2HPO_4$ (Gew.%) | 14,7 | 15,0 | 18,0 |
| Mikrohohlglaskugeln (Gew.%) | 27,0[1)] | 24,6[2)] | 14,0[3)] |
| Wasser (Gew.%) | 4,0 | 4,0 | 4,0 |
| Raumgewicht (kg/m³) | 700 | 540 | 490 |
| Druckfestigkeit (N/mm²): | | | |
| Raumtemperatur | 57,8 | 25,2 | 16,8 |
| 50°C | 42,7 | 21,0 | 12,2 |
| 70°C | 31,2 | 15,4 | 10,4 |
| 80°C | 25,8 | 12,7 | 8,9 |
| E-Modul bei Raumtemp. (N/mm²) | 2483 | 1852 | 1264 |

1) Dichte = 0,40 g/cm³
2) Dichte = 0,35 g/cm³
3) Dichte = 0,15 g/cm³

Beispiel 5

Es wurden fünf Einkomponenten-Formmassen hergestellt, bei denen jeweils die Isocyanat-Komponenten (Komponenten A und B) variiert wurden. Die jeweiligen Zusammensetzungen, die durch 3-stündige Aushärtung bei 135°C nach Zusatz von etwa 3,2 Gew.% Wasser erhaltenen Raumgewichte und die ermittelten Druckfestigkeiten ergeben sich aus der folgenden Tabelle.

| | A | B | C | D | E |
|---|---|---|---|---|---|
| Isocyanurat (Gew.%) | 56,3 | | 54,3 | 46,3 | - |
| Roh-MDI (Gew. %) | | 56,3 | 2,0 | 10,0 | - |
| HDI (Gew.%) | - | - | - | - | 56,3 |
| Komponente C 1) (Gew.%) | 16,5 | 16,5 | 16,5 | 16,5 | 16,5 |
| Mikrohohlglaskugeln (Gew.%) | 27,2 | 27,2 | 27,2 | 27,2 | 27,2 |
| Raumgewicht ($kg/m^3$) | 610 | 590 | - | 590 | - |
| Druckfestigkeit ($N/mm^2$): | | | | | |
| Raumtemperatur | 21,2 | 15,6 | 20,9 | 24,2 | 12,3 |
| $80^{\circ}C$ | 5,8 | 6,9 | 12,9 | 13,1 | 2,8 |

1) Komponente C bestand aus 95% Diammoniumhydrogenphosphat, 3% kristallinem Kaliumsilikat mit einem nominalen Porendurchmesser von 3 Å und 2 Gew.% pyrogener Kieselsäure. Die Mikrohohlglaskugeln besaßen eine Dichte von 0,37 $g/cm^3$. HDI= 1,6 Hexamethylendiisocyanat.

## Beispiel 6

Es wurden drei Formmassen mit unterschiedlichen Isocyanatgehalten und unterschiedlichen Mikrohohlglaskugelmengen hergestellt, um die erfindungsgemäße Formmasse mit denjenigen des Standes der Technik gemäß DE-OS 27 14 006 zu vergleichen. Die jeweiligen Zusammensetzungen und die erhaltenen Untersuchungsergebnisse sind der folgenden Tabelle wiedergegeben. Die Härtung erfolgte jeweils über einen Zeitraum von drei Stunden bei 130°C nach Zusatz von jeweils 3,2 Gew.% Wasser. Die Komponente C und die Mikrohohlglaskugeln waren identisch mit denjenigen in Beispiel 5.

| | A | B | C |
|---|---|---|---|
| Isocyanurat (Gew.%) | - | - | 53 |
| Roh-MDI (Gew.%) | 29 | 2,0 | 4,6 |
| Komponente C (Gew.%) | 1 | 1 | 16,0 |
| Mikrohohlglaskugeln (Gew.%) | 70 | 97 | 26,4 |
| Raumgewicht ($kg/m^3$) | 390 | 290 | 550 |
| Druckfestigkeit ($N/mm^2$): | | | |
| Raumtemp. | 6,8 | 1,1 | 27,2 |
| 80°C | 5,4 | 0,8 | 15,3 |

Beispiel 7

Es wurde eine Formmasse aus 52,0 Gew.% Isocyanurat, 5,0 Gew.% Roh-MDI, 16,5 Gew.% Komponente C gemäß Beispiel 5 und 26,5 Gew.% Mikrohohlglaskugeln mit einer Dichte von 0,35 $g/cm^3$ hergestellt. Die Aushärtung erfolgte in einer Form mit einem Volumen von 3,91 l bei einer Temperatur von 130°C über einen Zeitraum von 2 Studen, wobei die Formmasse vor der Aushärtung in einem Gewichtsverhältnis von 20: 1 mit Wasser gemischt worden war. Es wurden 5 verschiedene ausgehärtete Produkte hergestellt, die sich immer nur dadurch unterschieden, daß die Form mit unterschiedlichen Mengen der Formmasse beschickt wurde. Die jeweiligen Füllmengen und die Eigenschaften der erhaltenen ausgehärteten Produkte ergeben sich aus der folgenden Tabelle, wobei die Produkte C, D und E als Hartschäume anzusehen sind.

| | A | B | C | D | E |
|---|---|---|---|---|---|
| Füllmenge (kg) | 2,15 | 1,51 | 1,26 | 1,19 | 1,02 |
| Raumgewicht ($kg/m^3$) | 550 | 390 | 320 | 290 | 260 |
| Druckfestigkeit bei Raumtemp. ($N/mm^2$) | 21,6 | 10,3 | 6,1 | 4,9 | 3,9 |

Beispiel 8

Es wurden drei Formmassen mit verschiedenen Füllstoffkombinationen hergestellt. Die jeweiligen Zusammensetzungen und die nach zweistündiger Aushärtung bei 130°C ohne Wasserzusatz erhaltenen Eigenschaften ergeben sich aus aus der folgenden Tabelle.

| | A | B | C |
|---|---|---|---|
| Isocyanurat (Gew.%) | 62,0 | 16,0 | 16,0 |
| Roh-MDI (Gew.%) | - | 48,3 | 48,3 |
| $(NH_4)_2HPO_4$ | 10 | 16,0 | 16,0 |
| krist. K-Silikat (Gew.%) | 2,0 | 2,0 | 2,0 |
| Na-Silikat (Gew.%) | 1,0 | - | - |
| Kieselsäure (Gew.%) | - | 1,0 | 1,0 |
| Microloy[1] (Gew.%) | - | 16,7 | - |
| Kohlenstoff-Fasern[2] (Gew.%) | 5,0 | - | - |
| Mikrohohlglaskugeln[3] (Gew.%) | 20,0 | - | 16,7 |
| Raumgewicht (kg/m³) | 810 | 770 | 790 |
| Druckfestigkeit (N/mm²): | | | |
| Raumtemp. | 58,4 | 25,2 | 20,8 |
| 80°C | 26,2 | 9,8 | 6,5 |

1) s. Kunststoffe, 75 (1985), 7, Seite 421

2) Faserlänge 3-6 mm

3) Die Dichte der Mikrohohlglaskugeln betrug bei Produkt A 0,40 g/cm³ und bei Produkt C 0,35 g/cm³.

Die in den Beispielen 1 bis 8 hergestellten Produkte wurden jeweils auf ihr Brandverhalten untersucht. Sowohl nach 12 Sekunden als auch nach 60 Sekunden wurde bei den erfindungsgemäßen Produkten bei Beflammung kein Nachbrennen beobachtet. Ein Nachbrennen trat nur bei Produkt A von Beispiel 6 auf. Produkt B von Beispiel 6 konnte nicht untersucht worden, da keine ausreichenden Festigkeiten erzielten werden konnten.

Hinsichtlich der Rauchgasdichte erfüllten alle untersuchten Produkte die Anforderungen der ATS 1000.001, ausgenommen die Produkte A von Beispiel 6 und B und C von Beispiel 8, die eine starke Rauchgasentwicklung zeigten. Eine starke Rauchgasentwicklung wurde außerdem auch bei Produkt B von Beispiel 5 beobachtet.

Die erforderlichen Duckfestigkeiten bei Raumtemperatur und 80°C wurden von den Produkten A, B und E von Beispiel 5 und A und B von Beispiel 6 nicht erfüllt.

Beispiel 9

Es wurden Formmassen mit der in der folgenden Tabelle angegebenen Zusammensetzung hergestellt und zwei Stunden lang bei 130°C ausgehärtet. Die Produkte A, B und C wurden mit Kohlenstoffaser-Prepregs oder nur mit Kohlenstoffasergeweben beidseitig laminiert und dann 5 Min. lang einem Beflammungstest bei 1080°C unterworfen. Als Kohlenstoff-Fasergewebe diente eine Kohlenstoffaserleinwand mit einem Gewicht von 160 g/m². Bei Verwendung als Prepreg wurde dieses Kohlenstoffasergewebe mit etwa 60 bis 100 g/m² folgender Mischung behandelt: Isocyanurat 71,0 Gew.%
Roh-MDI 7,0 Gew.%

$(NH_4)_2HPO_4$ 18,0 Gew.%
krist. K-Silikat pyrogene 1,0 Gew.%
Kieselsäure 3,0 Gew.%

Ansatz C konnte beliebig zu Produkten mit Raumgewichten von 180 bis 500 kg/m³ ausgehärtet werden.

| | A | B | C | D |
|---|---|---|---|---|
| Isocyanurat (Gew.%) | 50,0 | 65,0 | 60,0 | 50,0 |
| Roh-MDI (Gew.%) | 5,0 | 6,0 | 6,0 | 4,0 |
| $(NH_4)_2HPO_4$ (Gew.%) | 13,0 | 15,0 | 14,0 | 13,0 |
| $NH_4H_2PO_4$ (Gew.%) | - | 1,0 | - | 1,0 |
| pyrogene Kieselsäure (Gew.%) | 2,0 | 1,0 | 2,0 | 1,0 |
| Mikrohohlglaskugeln D=0,40 g/cm³ (Gew.%) | 5,0 | 6,0 | - | 15,0 |
| Mikrohohlglaskugeln D=o,15 g/cm³ (Gew.%) | 2,0 | - | 5,0 | - |
| 55%-ige Na-Silikat-Lsg., $Na_2O:SiO_2=1:2$ (Gew.%) | - | - | 5,0 | - |
| Zinn-Mercaptan-Verb.(Gew.%) | 0,5 | 1,0 | 2,0 | 1,0 |
| Wasser (Gew.%) | 5,0 | 5,0 | - | - |
| Dimethylsiloxan-Alkylenoxid (Gew.%) | 0,5 | - | 1,0 | 0,5 |
| Triethylamin(Gew.%) | - | - | 1,0 | 0,5 |
| Trichlorfluormethan (Gew.%) | 17,0 | - | 4,0 | |
| Kohlenstoff-Fasern, Faserlänge 3-6 mm (Gew.%) | - | - | - | 4,0 |
| Raumgewicht kg/m³ | 200 | 190 | 220 | 310 |

Die Produkte A, B und C erfüllten beim Beflammungstest (1080°C, 5 Min.) die Anforderungen der ATS 1000.001. Produkt D erfüllte diese Anforderungen auch noch nach 7 Min. langer Beflammung ohne Prepreg. Eine 10 mm Platte ohne Prepreg aus Produkt C war auch nach 10 Min. Beflammung noch flammstabil.

## Ansprüche

1. Einkomponenten-Formmasse auf Basis von Polyisocyanato-Isocyanuraten und Flamm-und Brandschutzmitteln sowie gegebenenfalls Polyisocyanaten, Füllstoffen und Beschleunigern, gekennzeichnet durch:

A) 40 bis 80 Gew.% des Isocyanurats des 1,6-Hexamethylendiisocyanats mit einem NCO-Gehalt von 18 bis 24 Gew.%,

B) 0 bis 20 Gew.% Roh-MDI und/oder Präpolymer aus Polyol und Roh-MDI und/oder Isophorondiisocyanat gegebenenfalls in Kombination mit dimerisiertem Triazin des TDI, mischploymerisiertem Triazin von TDI und HDI und/oder Naphthalindiisocyanat,

C) 5 bis 20 Gew.% einer Mischung aus:

a) 50 bis 100 Gew.% sekundärem Ammoniumphosphat, wobei der Anteil des sekundären Ammoniumphosphats 80 bis 100 Gew.% beträgt, wenn die Komponente C) in der Formmasse insgesamt nur in einer Menge von 5 bis 10 Gew.% vorhanden ist,

b) 0 bis 20 Gew.% primärem Ammoniumphosphat,

c) 0 bis 20 Gew.% Zeolith und/oder kristallinem Alkalisilikat,

d) 0 bis 20 Gew.% feinteiliger Kieselsäure,

e) 0 bis 20 Gew.% $Ca_3(PO_4)_2$,

f) 0 bis 20 Gew.% Azodicarbonamid,

g) 0 bis 20 Gew.% calciniertem Calciumoxid,

D) 0 bis 50 Gew.% Füllstoff und

E) 0 bis 50 Gew.% Beschleuniger.

2. Formmasse nach Anspruch 1, dadurch gekennzeichnet, daß Komponente B in einer Menge von 2 bis 6 Gew.% vorhanden ist.

3. Formmasse nach Anspruch 1 oder 2, dadurch gekennzeichnet, daß Komponente C insgesamt und vorzugsweise auch jeder der Mischungsbestandteile a) bis g) für sich eine solche Korngrößenverteilung aufweisen, daß 50 bis 70 Gew.% eine Größe von 20 bis 50μm, nicht mehr als 30 Gew.% eine Größe von weniger als 20 μm und nicht mehr als 50 Gew.% eine Teilchengröße im Bereich von 50 bis 100 μm besitzen.

4. Formmasse nach einem der Ansprüche 1 bis 3, dadurch gekennzeichnet, daß Komponente C eine Mischung aus sekundärem Ammoniumphosphat, kristallinem Alkalisilikat, pyrogener Kieselsäure und $Ca_3(PO_4)_2$ ist.

5. Formmasse nach einem der Ansprüche 1 bis 4, dadurch gekennzeichnet, daß der Füllstoff der Komponente D ausgewählt ist aus Flugasche, Siliciumdioxid, $B_4C$, Mikrohohlkugeln aus Glas oder Phenolharzen, Kohlenstoffasern, Pre-ox-Fasern, Glasfasern, Metallfasern, Aluminiumflocken, cobweb-whiskers, Melaminharzpulver und/oder geschäumten Tonen.

6. Formmasse nach Anspruch 5, dadurch gekennzeichnet, daß die Mikrohohlkugeln mit nichtbrennbaren oder brandlöschenden Gasen gefüllt sind.

7. Formmasse nach Anspruch 5, dadurch gekennzeichnet, daß die Kohlenstoff-oder Pre-ox-Fasern eine Dicke von 0,001 bis 0,1 mm und Schnittlängen von 0,005 bis 50 mm und insbesondere 0,1 bis 5 mm aufweisen.

8. Verwendung der Formmasse gemäß einem der Ansprüche 1 bis 7 als Konstruktionswerkstoff, insbesondere Brandschutzkonstruktionswerkstoff.

9. Verwendung nach Anspruch 8, dadurch gekennzeichnet, daß der Konstruktionswerkstoff zur Herstellung von Formteilen und Plattenelementen für den Bau von Land-, Luft-und Wasserfahrzeugen verwendet wird.